# EUROPEAN PATENT SPECIFICATION

(11) **EP 1 218 259 B1**
(45) Date of publication and mention of the grant of the patent: **13.08.2003**
(21) Application number: 00962722.5
(22) Date of filing: 25.09.2000
(51) Int. Cl.: B65D 75/58

(54) **BLISTER OR SKIN PACKAGE**
BLISTER- ODER SKIN-PACKUNG
EMBALLAGE-COQUE

(30) Priority: 25.09.1999 GB 9922684; 10.06.2000 GB 0014091
(43) Date of publication of application: 03.07.2002
(73) Proprietor: Arthur W. Clowes Limited, Macclesfield, Cheshire SK11 6NY (GB)
(72) Inventor: BANN, Trevor, Congleton, Cheshire CW12 3JU (GB)
(74) Representative: Graves, Ronald
(86) International application number: GB0003670
(87) International publication number: WO01023272

(56) References cited:
- WO-A-93/22499
- WO-A-95/21105
- GB-A- 1 586 591
- GB-A- 2 265 885
- US-A- 5 030 283
- US-A- 5 791 478
- DATABASE WPI Section Ch, Week 198717 Derwent Publications Ltd., London, GB; Class A81, AN 1987-120098 XP002157270 & JP 62 064877 A (SUMITOMO CHEM IND KK), 23 March 1987 (1987-03-23)

## Description

This invention relates to packaging products, and in particular to packaging for articles, which package and display those articles at the point of sale to the public.

it is known to package articles so that the articles are visible to the buying public prior to purchase. One form of such packaging is known as a blister pack, in which one or more articles is mounted on a card or paper board, hereinafter referred to as a board, with the article or articles and at least the edges of the board encompassed by a blister of a transparent relatively rigid plastics material. After purchase, the article or articles can be removed from the blister pack and the board and blister material discarded. However, when the board and blister material are separated they cannot readily be recycled since particles of the board adhere to the blister material. Furthermore, the production of the blister, which is often formed to encompass the particular article or articles concerned closely and is therefore product specific, requires costly moulding machinery. In addition, it is generally quite difficult to open the pack by hand without the use of scissors, a knife or the like. This leads to accidents. Having regard to the above, an alternative packaging arrangement has been used in a form known as a skin pack. In this case the article is, or articles are, mounted on the board by means of a malleable film which forms to the shape of the article or articles. The film is bonded to the board by means of an adhesive of a strength sufficient to maintain the integrity of the pack during transportation and when displayed in the retail outlet, and to render the pack adequately tamper-proof. This provides a less costly package, but on separation of the board and film material it is found that the film material is contaminated by particles of board material still adhering to it. This results in it being very difficult to recycle the film material, and, as with the blister pack, this is not environmentally acceptable. One product has been proposed to overcome this problem, but without sufficient integrity to contain heavy articles. In addition, the board of this product is formed with slits in the location of the article to facilitate the vacuum forming of the skin around the article and the bonding of the film to the board. Such a pack may be product specific and may also be unsuitable for certain small or heavier articles.

It is the object of the present invention to provide a package suitable for large or small articles, which is more readily re-cyclable and therefore more environmentally acceptable than the known packaging products, but at a cost comparable with the currently used skin packs.

The invention provides a package product adapted to contain at least one article, comprising a board and a skin of a substantially transparent film mounting the article on the board and bonded to the board by means of an adhesive, whereby in combination, a coating containing an oil or wax is applied to a front face of the board to be contacted by the article, the adhesive is heat activated and is a water based adhesive with a water content of between 15% and 70% whereby on peeling the skin from the board to release an article, the skin is separated from the board with substantially no mutual contamination.

The adhesive may be a heat seal water based EVA-copolymer resin. A coating may be applied to a front face of the board to be contacted by an article. The coating may contain an oil or wax. The coating may contain a printing ink, or may be a printing ink. The printing ink may be a carton ink, preferably with a high oil or wax content.

The board may have at least 85% of re-cycled fibre therein, and preferably is a substantially 96% re-cycled white-line paper chipboard. The board may be made from chlorine free bleached pulp containing 60% woodfree white clippings from a paper converter. The board may be an air permeable board, and may have at least one perforation therein. The board may have perforations therein that are substantially uniformly distributed over the whole surface of the board. The skin may be pre-formed to the shape of the article prior to being bonded to the board. Alternatively the skin may be a malleable film. The skin may be a thermoplastic polymer film.

The board and the skin may have an aperture therethrough by means of which the package may be suspended for display purposes. Preferably such aperture is disposed at a location at which the skin is bonded to the board.

The invention also provides a method of packaging an article, comprising mounting the article on a board between the board and a skin of a substantially transparent film, applying to the board a coating containing an oil or wax, bonding the skin to the board by means of a water based adhesive having a water content of between 15% and 70%, and activating the adhesive by heat to bond the skin to the board, whereby on peeling the skin from the board to release the article the skin is separated from the board with substantially no mutual contamination.

The method may comprise applying the adhesive to the board prior to mounting the article thereon. The method may also comprise applying a coating to the board prior to applying the adhesive thereto. The board may be printed prior to or together with applying the coating to the board. The skin may be pre-formed to the shape of the article prior to being bonded to the board. In this case, the method may comprise bringing the skin and the board with the article thereon into contact and activating the adhesive by heating to bond the skin to the board.

Alternatively, the method may comprise heating the skin to render it malleable, bringing the skin and the board with the article thereon into contact and activating the adhesive by further heating to bond the skin to the board. In this case the method may comprise applying suction to the board at that side thereof remote from the article to form the skin to the shape of the article.

The method may also comprise providing an aperture through the assembled board and skin by means of which the package may be suspended for display purposes. Preferably such aperture is provided at a location at which the skin is bonded to the board.

The method may also comprise packaging a plurality of articles comprising mounting the articles mutually spaced on a board between the board and a skin of a substantially transparent film, bonding the skin to the board by means of an adhesive, applying suction to the board at that side thereof remote from the articles, and activating the adhesive by heat to bond the skin to the board, whereby the adhesive is operable on peeling the skin from the board to release the article to separate the skin from the board with substantially no mutual contamination.

The skin may be pre-formed to the shape of the articles prior to being bonded to the board. Alternatively, the skin may be pre-heated to render it malleable, the skin and the board with the article thereon brought into contact and the adhesive activated by further heating to bond the skin to the board. In this case, suction may be applied to the board at that side thereof remote from the articles to form the skin to the shape of the articles. The method may comprise separating the articles by cutting the assembled board and skin between the articles.

The invention will now be further described with reference to the accompanying drawings in which:
- Fig. 1: is a diagrammatic illustration of a packaged article, and
- Fig. 2: is an illustration of several articles in a pack.

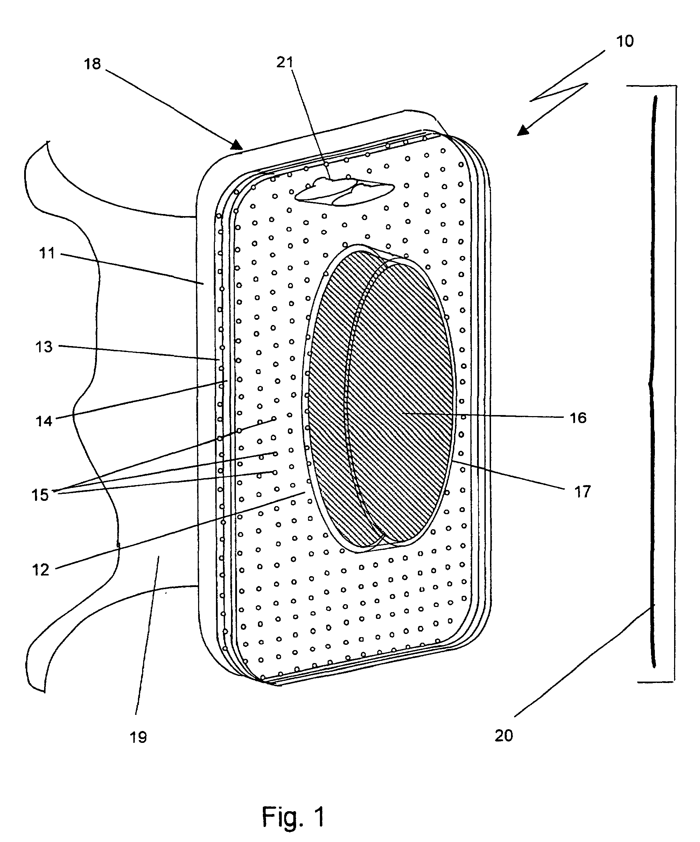

Referring now to Fig. 1, there is shown diagrammatically a skin or blister pack 10 comprising a board 11 to the front face 12 of which a coating 13 is applied. To the coated board 11 a water based adhesive 14 is applied. In forming a skin pack 10, the board 11 as shown in the Figure, is air permeable, in this case such permeability being achieved by having perforations 15 uniformly distributed over the surface 12. An article 16 is placed on a central part of the front face 12 of the board 11 and a transparent film forming a skin 17, pre-heated to render it malleable, is placed over the article 16 and brought into contact with the front face 12 of the board 11. Suction is applied to the rear face 18 of the board 11 by suction means 19, thereby withdrawing air from between the board 11 and the skin 17 and forming the skin 17 to the shape of the article 16. At the same time a heater 20 applies further heat to the adhesive 14 to activate it and bond the skin 17 to the board 11 surrounding the article 16. The amount of further heating, time and temperature, is dependent on the thickness of the skin 17, and the heat sensitivity and the dimensions of the product 16. A hanging aperture 21 is stamped out of the board 11 and skin 17 at a location at which they are bonded together, in order to facilitate suspension of the thus formed skin pack 10 for display purposes. As an alternative, in forming a blister pack 10, the skin 17 is pre-formed to the shape of the article 16 and the above described pre-heating and application of suction are not required.

The board 11 comprises at least 85% of re-cycled fibre, and preferably is a substantially 96% re-cycled white-line paper chipboard. The board is made from chlorine free bleached pulp containing 60% woodfree white clippings from a paper converter. The coating 13 has a high oil or wax content. The coating 13 may comprise or contain a printing ink, preferably a carton ink, for example Lasersafe Pantone ink (Pantone is a Registered Trade Mark), whereby advertising, details of the article 16 to be mounted on the board 11 and/or instructions for its use may be printed on the board 11. Alternatively, a coating of oil or wax may be applied on top of the printing. The adhesive 14 is a water based adhesive, whereby it is operable, on peeling the skin 17 from the board 11 to release the article 16, to separate the skin 17 from the board 11 with substantially no mutual contamination. The adhesive 14 is a heat seal water based EVA-copolymer resin, for example Adcote 37 R 929 adhesive. As an alternative to the method described above, the adhesive 14 may be applied to the film prior to its application to the board 11 to form the skin 17. The film is a thermoplastic polymer film. In the case of a skin pack 10, the film is preferably an ionomer resin of partial zinc or sodium salts of ethylene-methacrylic acid copolymers and terpolymers, for example SURLYN film (SURLYN is a Registered Trade Mark).

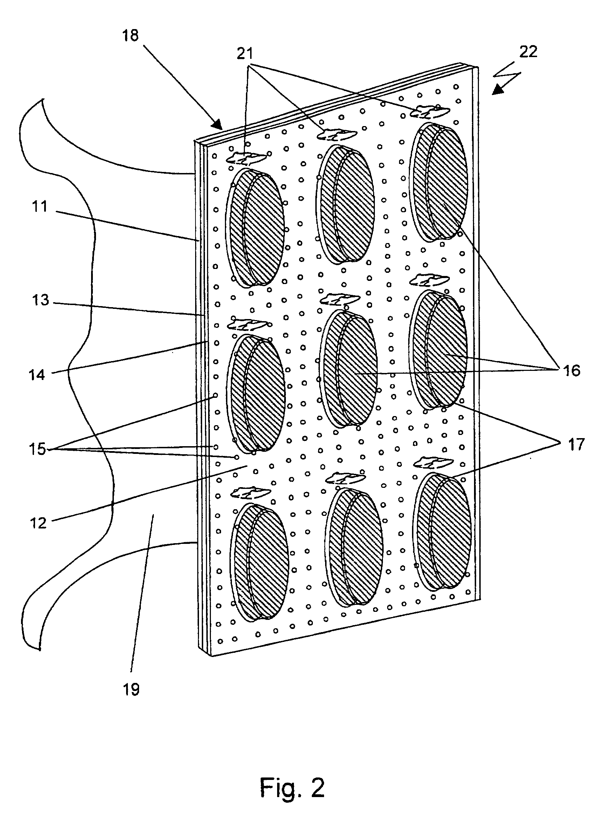

In Fig. 2, there is shown a skin or blister pack 22 which is formed in the same manner as pack 10 of Fig. 1, except that in this case several articles 16 are packaged each in a respective shaped portion of the skin 17 on the board 11. The articles 16 may be the same as or may be different from each other, as appropriate in the particular circumstances. After the pack 22 is produced, the packaged articles 16 may be separated by cutting the assembled pack 22 between the articles 16, thereby forming individual packs 10 of the type shown in Fig. 1. If required, and as shown, a respective hanging aperture 21 for each article 16 may be provided at appropriate locations of the pack 22, but these are preferably cut simultaneously with the separating cutting step.

By means of the invention there is provided a skin or blister pack suitable for large or small articles, which is environmentally acceptable by virtue of the non-contamination of the board and film materials by the other to facilitate separate re-cycling of those materials, but can be produced at a cost comparable with the currently used skin or blister packs. Alternative arrangements may be apparent to persons skilled in the art. For example, instead of the uniformly distributed perforations shown in the figures, a board 11 and coating 13 may be used that is air permeable to a sufficient extent and the suction then applied to a sufficient strength that the skin 17 is drawn to the shape of the or each article 16. Alternatively, a single aperture, e.g. a slit may be provided, located behind the article or each article, through which the suction can withdraw the air to form the skin 17 to the shape of the or each article 16.

## Claims

1. A package product (10) containing an article (16), comprising a board (11) and a skin (17) of a substantially transparent film mounting the article (16) on the board (11) and bonded to the board (11) by means of an adhesive (14), **characterised in that**, in combination, a coating (13) containing an oil or wax is applied to a front face (12) of the board (11) to be contacted by the article (16), the adhesive (14) is heat activated and is a water based adhesive with a water content of between 15% and 70%, whereby on peeling the film (17) from the board (11) to release the article (16) the film (17) is separated from the board (11) with substantially no mutual contamination.

2. A package product according to claim 1, **characterised in that** the adhesive (14) is a heat seal water based EVA-copolymer resin.

3. A package product according to claim 1 or claim 2, **characterised in that** the coating (13) comprises a printing ink.

4. A package product according to claim 3, **characterised in that** the printing ink has a high oil or wax content.

5. A package product according to any one of claims 1 to 4, **characterised in that** the board (11) has at least 85% of re-cycled fibre therein.

6. A package product according to any one of claims 1 to 5, **characterised in that** the board (11) is an air permeable board.

7. A package product according to claim 6, **characterised in that** the board (11) has perforations (15) therein that are substantially uniformly distributed over the whole surface of the board (11).

8. A package product according to any one of claims 1 to 7, **characterised in that** the skin (17) is pre-formed to the shape of the article (16) prior to being bonded to the board (11).

9. A package product according to any one of claims 1 to 8, wherein the skin (17) is a thermoplastic polymer film.

10. A method of packaging an article (16) in which the article (16) is mounted on a board (11) between the board (11) and a skin (17) of a substantially transparent film, **characterised by** applying to the board (11) a coating (13) containing an oil or wax, bonding the skin (17) to the board (11) by means of a water based adhesive (13) having a water content of between 15% and 70%, and activating the adhesive (13) by heat to bond the skin (17) to the board (11), whereby on peeling the skin (17) from the board (11) to release the article (16) the skin (17) is separated from the board (11) with substantially no mutual contamination.

11. A method according to claim 10, **characterised by** applying the adhesive (13) to the board (11) prior to mounting the article (16) thereon.

12. A method according to claim 10 or claim 11, **characterised by** pre-forming the skin (17) to the shape of the article (16) prior to it being bonded to the board (11).

13. A method according to claim 12, comprising bringing the skin (17) and the board (11) with the article (16) thereon into contact and activating the adhesive (13) by heating to bond the skin (17) to the board (11).

14. A method according to any one of claims 10 to 13, **characterised by** applying suction to the board (11) at that side (18) thereof remote from the article (16) to form the skin (17) to the shape of the article (16).

15. A method according to any one of claims 10 to 14 of packaging a plurality of articles in **characterised in that** the articles (16) are mounted mutually spaced on a board (11) between the board (11) and the skin (17), comprising pre-forming the skin (17) to the shapes of the articles (16) prior to bonding the skin (17) to the board (11).

## Patentansprüche

1. Verpackungsprodukt (10), das einen Gegenstand (16) enthält, mit einer Pappe (11) und einer Haut (17) aus einem im wesentlichen transparenten Film, der den Gegenstand (16) auf der Pappe (11) befestigt und an die Pappe (11) mittels eines Klebstoffes (14) gebunden ist, **dadurch gekennzeichnet, dass**, in Kombination, eine Beschichtung (13), die Öl oder Wachs enthält, auf einer Vorderseite (12) der Pappe (11) aufgebracht ist, die mit dem Gegenstand (16) in Kontakt gebracht werden soll, wobei der Klebstoff (14) wärmeaktiviert ist und ein auf Wasser basierender Klebstoff mit einem Wassergehalt zwischen 15 % und 70 % ist, wodurch beim Ablösen des Films (17) von der Pappe (11), um den Gegenstand (16) freizugeben, der Film (17) von der Pappe (11) im wesentlichen ohne gegenseitige Kontamination getrennt wird.

2. Verpackungsprodukt nach Anspruch 1, **dadurch gekennzeichnet, dass** der Klebstoff (14) ein auf Wasser basierender Heißsiegel-EVA-Copolymerharz ist.

3. Verpackungsprodukt nach Anspruch 1 oder Anspruch 2, **dadurch gekennzeichnet, dass** die Beschichtung (13) eine Drucktinte aufweist.

4. Verpackungsprodukt nach Anspruch 3, **dadurch gekennzeichnet, dass** die Drucktinte einen hohen Öl- oder Wachsgehalt besitzt.

5. Verpackungsprodukt nach einem der Ansprüche 1 bis 4, **dadurch gekennzeichnet, dass** die Pappe (11) mindestens 85 % einer recycelten Faser darin besitzt.

6. Verpackungsprodukt nach einem der Ansprüche 1 bis 5, **dadurch gekennzeichnet, dass** die Pappe (11) eine luftdurchlässige Pappe ist.

7. Verpackungsprodukt nach Anspruch 6, **dadurch gekennzeichnet, dass** die Pappe (11) Perforationen (15) darin besitzt, die im wesentlichen einheitlich über die gesamte Oberfläche der Pappe (11) verteilt sind.

8. Verpackungsprodukt nach einem der Ansprüche 1 bis 7 **dadurch gekennzeichnet, dass** die Haut (17) zur Form des Gegenstands (16) vorgeformt ist, bevor sie an die Pappe (11) gebunden wird.

9. Verpackungsprodukt nach einem der Ansprüche 1 bis 8, bei dem die Haut (17) ein thermoplastischer Polymerfilm ist.

10. Verfahren zum Verpacken eines Gegenstands (16), bei dem der Gegenstand (16) auf einer Pappe (11) zwischen der Pappe (11) und einer Haut (17) aus einem im wesentlichen transparenten Film befestigt wird, **gekennzeichnet durch** Aufbringen einer Beschichtung (13), die Öl oder Wachs enthält, auf die Pappe (11), Binden der Haut (17) an die Pappe (11) mittels eines auf Wasser basierenden Klebstoffes (13), der einen Wassergehalt zwischen 15 % und 70 % besitzt, und Aktivieren des Klebstoffes (13) **durch** Wärme, um die Haut (17) an die Pappe (11) zu binden, wobei beim Ablösen der Haut (17) von der Pappe (11), um den Gegenstand (16) freizugeben, die Haut (17) von der Pappe (11) im wesentlichen ohne gegenseitige Kontamination getrennt wird.

11. Verfahren nach Anspruch 10, **gekennzeichnet durch** Aufbringen des Klebstoffes (13) auf die Pappe (11) vor dem Befestigen des Gegenstands (16) darauf.

12. Verfahren nach Anspruch 10 oder Anspruch 11, **gekennzeichnet durch** Vorformen der Haut (17) zur Form des Gegenstands (16), bevor sie an die Pappe (11) gebunden wird.

13. Verfahren nach Anspruch 12, mit Inkontaktbringen der Haut (17) und der Pappe (11) mit dem Gegenstand (16) darauf und Aktivieren des Klebstoffs (13) durch Erwärmen, um die Haut (17) an die Pappe (11) zu binden.

14. Verfahren nach einem der Ansprüche 10 bis 13, **gekennzeichnet durch** Anlegen eines Sogs an die Pappe (11) an dessen Seite (18), die von dem Gegenstand (16) entfernt ist, um die Haut (17) zur Form des Gegenstands (16) zu formen.

15. Verfahren nach einem der Ansprüche 10 bis 14 zum Verpacken einer Mehrzahl von Gegenständen, **dadurch gekennzeichnet, dass** die Gegenstände (16) gegenseitig beabstandet auf einer Pappe (11) zwischen der Pappe (11) und der Haut (17) befestigt werden, mit Vorformen der Haut (17) zu den Formen der Gegenstände (16) vor dem Binden der Haut (17) an die Pappe (11).

## Revendications

1. Emballage (10) contenant un article (16), comprenant un carton (11) et une peau (17) constituée d'un film pratiquement transparent maintenant l'article (16) sur le carton (11) et liée au carton (11) au moyen d'un adhésif (14), **caractérisé en ce que** l'on applique, en combinaison, un revêtement (13) contenant une huile ou une cire sur la face avant (12) du carton (11) destinée à être en contact avec l'article (16), on active par voie thermique l'adhésif (14) qui est un adhésif aqueux présentant une teneur en eau comprise entre 15 % et 70 %, ce qui permet lors du pelage du film (17) du carton (11) pour libérer l'article (16), que le film (17) soit séparé du carton (11) pratiquement sans contamination mutuelle.

2. Emballage selon la revendication 1, **caractérisé en ce que** l'adhésif (14) est une résine aqueuse de copolymère d'EVA thermoscellable.

3. Emballage selon la revendication 1 ou 2, **caractérisé en ce que** le revêtement (13) comprend une encre d'impression.

4. Emballage selon la revendication 3, **caractérisé en ce que** l'encre d'impression présente une teneur en huile ou en cire élevée.

5. Emballage selon l'une quelconque des revendications 1 à 4, **caractérisé en ce que** le carton (11) présente dedans au moins 85 % de fibres recyclées.

6. Emballage selon l'une quelconque des revendications 1 à 5, **caractérisé en ce que** le carton (11) est un carton perméable à l'air.

7. Emballage selon la revendication 6, **caractérisé en ce que** le carton (11) présente dedans des perforations (15) qui sont pratiquement uniformément réparties sur toute la surface du carton (11).

8. Emballage selon l'une quelconque des revendications 1 à 7, **caractérisé en ce que** la peau (17) est préformée à la forme de l'article (16) avant d'être liée au carton (11).

9. Emballage selon l'une quelconque des revendications 1 à 8, **caractérisé en ce que** la peau (17) est un film polymère thermoplastique.

10. Procédé d'emballage d'un article (16) dans lequel l'article (16) est disposé sur un carton (11) entre le carton (11) et une peau (17) constituée d'un film pratiquement transparent, **caractérisé en ce que** l'on applique au carton (11) un revêtement (13) contenant une huile ou une cire, on lie la peau (17) au carton (11) au moyen d'un adhésif aqueux (13) présentant une teneur en eau comprise entre 15 % et 70 %, et on active l'adhésif (13) par voie thermique pour lier la peau (17) au carton (11), ce qui permet lors du pelage du film (17) du carton (11) pour libérer l'article (16), que le film (17) soit séparé du carton (11) pratiquement sans contamination mutuelle.

11. Procédé selon la revendication 10, **caractérisé en ce que** l'on applique l'adhésif (13) au carton (11) avant de disposer l'article (16) dessus.

12. Procédé selon la revendication 10 ou 11, **caractérisé en ce que** l'on préforme la peau (17) à la forme de l'article (16) avant de la lier au carton (11).

13. Procédé selon la revendication 12, comprenant le fait que l'on amène en contact la peau (17) et le carton (11) avec l'article (16) dessus, et que l'on active l'adhésif (13) par voie thermique pour lier la peau (17) au carton (11).

14. Procédé selon l'une quelconque des revendications 10 à 13, **caractérisé** en que l'on applique une aspiration au carton (11) du côté (18) de ce dernier distant de l'article (16) pour mettre la peau (17) à la forme de l'article (16).

15. Procédé selon l'une quelconque des revendications 10 à 14, pour emballer plusieurs articles, **caractérisé en ce que** les articles sont disposés tout en étant espacés les uns par rapport aux autres, sur un carton (11) entre le carton (11) et la peau (17), comprenant le préformage de la peau (17) aux formes des articles (16) avant la liaison de la peau (17) au carton (11).
